# EUROPEAN PATENT SPECIFICATION

(11) **EP 2 770 595 B1**
(45) Date of publication and mention of the grant of the patent: **20.11.2019**
(21) Application number: 14000582.8
(22) Date of filing: 19.02.2014
(51) Int. Cl.: F16G 11/02, H02G 1/08

(54) **Improvements in and relating to cable rods**
Verbesserungen bei und im Zusammenhang mit Kabelstangen
Améliorations de et associées à des tiges de câble

(30) Priority: 20.02.2013 GB 201302956
(43) Date of publication of application: 27.08.2014
(73) Proprietor: Super ROD Limited, Blaenavon Torfaen, Gwent NP4 9RL (GB)
(72) Inventor: Duncan, Malcolm, Torfaen, Gwent NP4 9RL (GB)
(74) Representative: Butler, Kathryn Louise

(56) References cited:
- WO-A2-2007/015101
- GB-A- 1 199 726
- GB-A- 2 320 951
- JP-A- 2009 163 000
- US-A- 3 906 619
- US-B1- 6 279 877
- "HELLERMANN TYTON - ESSENTIALS", INTERNET CITATION, December 2006 (2006-12), XP002410123, Retrieved from the Internet: URL:http://www.hellermanntyton.co.uk/BaseC MP/documents/5000/Sec_6_Essentials.pdf [retrieved on 2006-12-01]

## Description

This invention relates to cable rods of the type which include eg threaded connectors at each end by which multiple rods may be joined together and can be used for installing or removing cabling such as electric wiring or optical fibres.

Cable rods of the foregoing type necessarily have to be flexible but stiff along their major axes, as well as having great tensile strength for pulling loads when installing cabling, such as those cable rods available at www.super-rod.co.uk which advertise a pulling strength of 200kg. These requirements limit the choice of material suitable for cable rods to high grade plastics such as nylon and resin impregnated fibreglass where more flexibility and more rigidity is required and in a similar manner there is a limited choice as to how the cable rod connectors can be attached to the end of the cable rod without damaging the rod. They can, for example, be secured by a suitable epoxy resin, but this is time consuming and complicated with inconsistent results and special handling being required to conform to health and safety regulations. A favoured alternative is to instead use complementary pairs of threaded male and female cylindrical brass connectors having smooth connection bores of diameter slightly greater than the cable, rod, with each connector thereafter being pinched or swaged over a respective end of the connector rod to reduce the diameter of the connector and bore so that the connectors press tightly around the ends of the cable rod. Whilst this solution is relatively straightforward care must be taken, particularly in the case of glass fibre cable rods, to ensure that the fibres are not crushed and hence the rod weakened in this section. In the case of high grade plastics cable rods such as those made of nylon this is less of a problem but care still needs to be taken to ensure that the nylon is not compressed too much to the extent that it is partially extruded out of the bore in the connector during the swaging process. Hence, particularly in the case of cable rods made from eg nylon, there is a practical upper limit to the pull-out/pull-up value attainable through the use of the swaging process and hence there is a practical limit to the amount such a cable rod can lift before the connector and the rod itself separate under load.

WO2007015101 discloses a rod (figure 3) having a male connector fitted to one end thereof, and a female connector fitted to the opposite end thereof. The female connector is coupled to one end of the rod via a sleeve and an end-cap. The end-cap is placed over the end of the rod and the sleeve is then screwed onto the end-cap, over the end of the rod. The outer surface of the sleeve comprises an external thread which is arranged to couple with an internally threaded bore formed in the female connector. The female connector is secured to the rod by the action of the end-cap becoming compressed between the sleeve and rod as the sleeve screws into the threaded bore of the female connector.

US6729877 discloses an electrical wire fish implement comprising a number of sections which are secured together using connectors. The connectors are secured to the ends of a respective rod use of dimples (lines 39-41, column 2) for securing male and female connectors to rods, which are used to secure the respective connector to the end of a rod.

Hellermann Tyton provides a catalogue which discloses the use of flexible rods having a male connector coupled to one end and a female connector coupled to the other end, so that rods can be detachably coupled together. The connectors are coupled to the respective rods via an adhesive.

JP2009163000 discloses a guiding element for guiding wires and the like around bends and between obstacles.

GB2320951 discloses an extendable tool for use in manipulating small diameter wire and the like. The tool comprises a number of flexible rods 10 having a ferrule disposed at each end thereof. Each ferrule comprises a first recess at one end thereof, having a diameter which is substantially the same as the diameter of the rod 10. Each end of the rod is separately placed within a first recess of a respective ferrule and retained in place by crimping the ferrule over the region of the first recess (lines 17-28, page 9) for example. Each ferrule further comprises a second recess formed at the end thereof which is opposite the first end and which comprises an internal thread. The second recess is separated from the first recess and is arranged to receive a cylindrical member comprising an external thread so that female connectors and thus different rods 10 can be detachably couple together.

GB1199726 discloses a tubing having a male connector secured to one end thereof and a female connector secured to the opposite end of the tubing. Each of the male and female connectors are screwed onto a free end of the tube and are secured in place by a rivet, sonic weld or adhesive, and permit tubing sections to be coupled together.

The present invention is derived from the realisation that a different approach which does not purely rely upon a squeezed or swaged connection between the end of the cable rod and the metal, typically brass, connector would be desirable if it can improve the tensile strength between the connector and the cable rod.

According to the invention there is provided a flexible cable rod arrangement as claimed in claim 1.

With this arrangement a considerable improvement can be achieved by the elegantly simple expedient of, when forming bores and threads on the cable rod connectors by forming an additional thread in the otherwise smooth connector bore and using that thread for a different purpose i.e. to grip the outside of the end of the rod after it has been swaged or crimped onto it.
The invention will now be described, by way of example only, with reference to the accompanying drawings in which:
Figure 1 is a perspective view of a male brass connector according to the invention, and
Figure 2 is a perspective view of a female brass connector swaged onto the end of a cable rod.

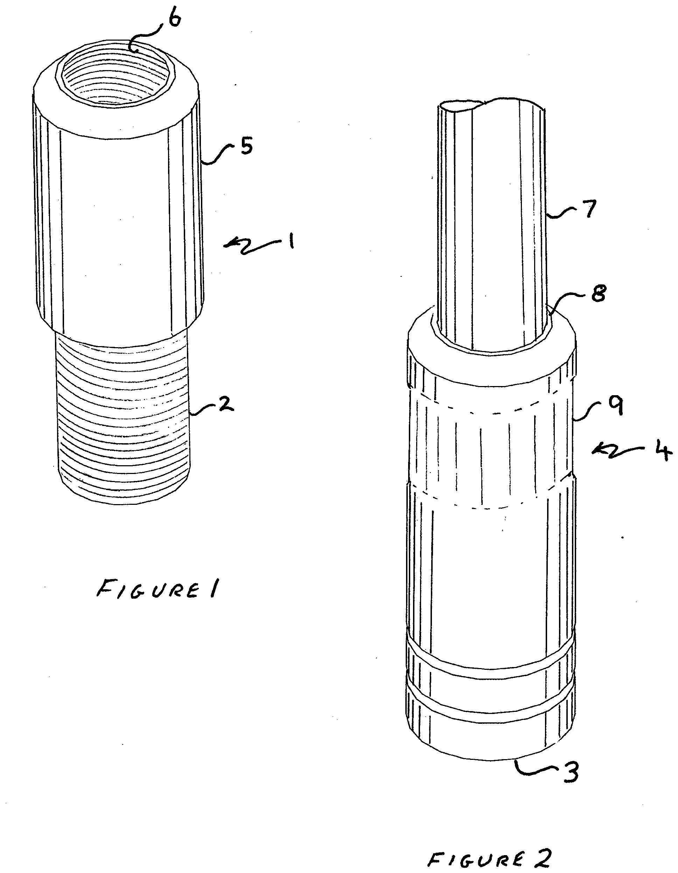

Figure 1 shows a generally cylindrical brass male connector 1 having a threaded, male connector end 2 for fitting into the threaded female end 3 of a female connector 4 as shown in Figure 2. The male connector 1 has a collar portion 5 which includes a threaded, blind, bore 6 for receiving, in use, an end of a cable rod 7 as shown in Figure 2. The female connector 4 has a correspondingly blind, threaded bore 8 by which it can receive the end of the cable rod 7, whereafter the radially recessed region 9 shows that it has been swaged i.e. pressed or crimped against the outer walls of the rod 7 in this region to form a permanent fixing in which the threads within the female connector 4 bite into the end of the rod 7 to increase the grip of the connector 4 on the rod 7.

In a similar manner, the male connector 1 can be swaged about its cylindrical part 5 after it has been fitted to the other end of the cable rod 7 to therefore provide a complete cable rod with increased tensile strength. In tests it has been shown that, as compared to a conventional cable rod of the type referred to earlier, which have an average failure under a 218kg load, corresponding tests on cable rods with connectors made in accordance with the invention failed on average under a load of 330kg, representing a 66% increase in tensile strength before failure.

The invention therefore provides a simple solution to the problem of ensuring that the ends of the cable rod are not damaged during the pinching or swaging process as a result of too much mechanical pressure being applied to the connectors 1, 4 by using the threaded portion of the connectors as teeth in the swaged region to thereby substantially increase the strength of the connection.

## Claims

1. A flexible cable rod arrangement having a cable rod (7) and male and female connectors (1, 4) fixed to each end of said cable rod (7) for connection to another such flexible cable rod arrangement or a cable rod tool, the connectors (1,4) including threaded bores into which the free ends of the cable rod (7) has been inserted during manufacture, the connectors (1,4) are thereafter swaged or crimped over the end of the cable rod (7), such that the threads of the bores of the respective connectors (1,4) act as teeth to grip the outer edges of the cable rod (7) at the respective swaged or crimped region (9).

2. A flexible cable rod according to claim 1, wherein the connectors (1, 4) are generally cylindrical.

3. A flexible cable rod according to any preceding claim, wherein the connectors (1, 4) are formed of brass.

4. A flexible cable rod according to any preceding claim, wherein the male connector (1) has a threaded male connector end for fitting into a threaded female end of a female connector of a further rod or rod tool.

5. A flexible cable rod according to any one of claims 1 to 3, wherein the female connector (4) has a threaded, female connector end for fitting into a threaded male end of a male connector of a further rod or rod tool.

6. A flexible cable rod according to any preceding claim, wherein the male connector (1) has a collar portion (5) which includes a blind, threaded bore for receiving an end of a cable rod.

7. A flexible cable rod according to any preceding claim, wherein the female connector (4) has a collar portion (9) which includes a blind, threaded bore (8) for receiving an end of cable rod (7).

8. A flexible cable rod according to any preceding claim, wherein the male and female connectors (1, 4) have a radially recessed region.

9. A method of manufacturing a flexible cable rod arrangement including the steps of:
inserting one end of a cable rod (7) into a threaded bore of a male connector (1);
Inserting the other end of the cable rod into a threaded bore of a female connector (4); and
swaging or crimping the male and female connectors (1, 4) over the respective ends of the cable rod, such that the threads of the bores of the respective connectors act as teeth to grip the outer edges of the cable rod at the respective swaged or crimped regions.

10. A method of manufacturing a flexible cable rod according to claim 9, wherein the connectors (1, 4) are generally cylindrical and the connectors are crimped or swaged about their cylindrical part.

## Patentansprüche

1. Flexible Kabelstangenanordnung mit einer Kabelstange (7) und männlichen und weiblichen Verbindern (1, 4), die an jedem Ende der Kabelstange (7) zur Verbindung mit einer anderen derartigen flexiblen Kabelstangenanordnung oder einem Kabelstangenwerkzeug angebracht sind, wobei die Verbinder (1, 4) Gewindebohrungen aufweisen, in welche die freien Enden der Kabelstange (7) während der Fertigung eingeführt worden sind,
wobei die Verbinder (1, 4) danach über das Ende der Kabelstange (7) gesenkgeformt oder gecrimpt werden, so dass die Gewinde der Bohrungen der entsprechenden Verbinder (1, 4) als Zähne zum Greifen der äußeren Kanten der Kabelstange (7) an dem entsprechenden gesenkgeformten oder gecrimpten Bereich (9) fungieren.

2. Flexible Kabelstange nach Anspruch 1, wobei die Verbinder (1, 4) allgemein zylindrisch sind.

3. Flexible Kabelstange nach einem der vorstehenden Ansprüche, wobei die Verbinder (1, 4) aus Messing ausgebildet sind.

4. Flexible Kabelstange nach einem der vorstehenden Ansprüche, wobei der männliche Verbinder (1) ein männliches Verbinderende mit Gewinde für den Einbau in das weibliche Gewindeende eines weiblichen Verbinders einer weiteren Stange oder eines Stangenwerkzeugs aufweist.

5. Flexible Kabelstange nach einem der Ansprüche 1 bis 3, wobei der weibliche Verbinder (4) ein weibliches Verbinderende mit Gewinde für den Einbau in ein männliches Gewindeende eines männlichen Verbinders einer weiteren Stange oder eines Stangenwerkzeugs aufweist.

6. Flexible Kabelstange nach einem der vorstehenden Ansprüche, wobei der männliche Verbinder (1) einen Kragenteil (5) aufweist, der eine Blindbohrung mit Gewinde zur Aufnahme eines Endes einer Kabelstange aufweist.

7. Flexible Kabelstange nach einem der vorstehenden Ansprüche, wobei der weibliche Verbinder (4) einen Kragenteil (9) aufweist, der eine Blindbohrung mit Gewinde (8) zur Aufnahme eines Endes der Kabelstange (7) aufweist.

8. Flexible Kabelstange nach einem der vorstehenden Ansprüche, wobei die männlichen und weiblichen Verbinder (1, 4) einen radial ausgesparten Bereich aufweisen.

9. Verfahren zur Herstellung einer flexiblen Kabelstangenanordnung, das die folgenden Schritte aufweist:
Einführen eines Endes einer Kabelstange (7) in eine Gewindebohrung eines männlichen Verbinders (1);
Einführen des anderen Endes der Kabelstange in eine Gewindebohrung eines weiblichen Verbinders (4); und
Gesenkformen oder Crimpen der männlichen und weiblichen Verbinder (1, 4) über die entsprechenden Enden der Kabelstange, so dass die Gewinde der Bohrungen der entsprechenden Verbinder als Zähne zum Greifen der äußeren Kanten der Kabelstange an den entsprechenden gesenkgeformten oder gecrimpten Bereichen fungieren.

10. Verfahren zur Herstellung einer flexiblen Kabelstange nach Anspruch 9, wobei die Verbinder (1, 4) allgemein zylindrisch sind, und wobei die Verbinder um deren zylindrischen Teil gecrimpt oder gesenkgeformt werden.

## Revendications

1. Agencement de tige de câble flexible ayant une tige de câble (7) et des raccords mâle et femelle (1, 4) fixés à chaque extrémité de ladite tige de câble (7) pour liaison à un autre agencement de tige de câble flexible ou à un outil à tige de câble, les raccords (1, 4) comprenant des trous filetés dans lesquels les extrémités libres de la tige de câble (7) ont été insérées pendant la fabrication, les raccords (1, 4) étant ensuite estampés ou sertis sur l'extrémité de la tige de câble (7), de sorte que les filets des alésages des raccords (1, 4) respectifs servent de dents pour saisir les bords extérieurs de la tige de câble (7) au niveau de la région estampée ou sertie (9) respective.

2. Tige de câble flexible selon la revendication 1, les raccords (1, 4) étant généralement cylindriques.

3. Tige de câble flexible selon l'une quelconque des revendications précédentes, les raccords (1, 4) étant formés en laiton.

4. Tige de câble flexible selon l'une quelconque des revendications précédentes, le raccord mâle (1) ayant une extrémité de raccord mâle filetée destinée à être insérée dans une extrémité femelle filetée d'un raccord femelle d'une autre tige ou d'un autre outil à tige.

5. Tige de câble flexible selon l'une quelconque des revendications 1 à 3, le raccord femelle (4) ayant une extrémité de raccord femelle filetée destinée à être insérée dans une extrémité mâle filetée d'un raccord mâle d'une autre tige ou d'un autre outil à tige.

6. Tige de câble flexible selon l'une quelconque des revendications précédentes, le raccord mâle (1) ayant une partie col (5) qui comprend un alésage borgne fileté pour recevoir une extrémité d'une tige de câble.

7. Tige de câble flexible selon l'une quelconque des revendications précédentes, le raccord femelle (4) ayant une partie col (9) qui comprend un alésage borgne fileté (8) pour recevoir une extrémité de la tige de câble (7).

8. Tige de câble flexible selon l'une quelconque des revendications précédentes, les raccords mâle et femelle (1, 4) ayant une région radialement en retrait.

9. Procédé de fabrication d'un agencement de tige de câble flexible comprenant les étapes consistant à :
insérer une extrémité d'une tige de câble (7) dans un alésage fileté d'un raccord mâle (1) ;
insérer l'autre extrémité de la tige de câble dans un alésage fileté d'un raccord femelle (4) ; et
estamper ou sertir les raccords mâle et femelle (1, 4) sur les extrémités respectives de la tige de câble, de sorte que les filetages des alésages des raccords respectifs servent de dents pour saisir les bords extérieurs de la tige de câble dans les zones estampées ou serties respectives.

10. Procédé de fabrication d'une tige de câble flexible selon la revendication 9, les raccords (1, 4) étant généralement cylindriques et les raccords étant estampés ou sertis sur leur partie cylindrique.
